# EUROPEAN PATENT APPLICATION

(11) **EP 4 269 374 A1**
(43) Date of publication of application: **01.11.2023**
(21) Application number: 22461543.5
(22) Date of filing: 28.04.2022
(51) Int. Cl.: C05F 5/00, A01G 24/23, A01G 24/28, C05F 9/04, C05F 11/02, C05F 11/04, C05F 11/00

(54) **GROWTH MEDIUM COMPRISING WOOD FIBER AND METHOD FOR PRODUCING WOOD FIBER**

(71) Applicant: Sobex sp. z o.o., 66-530 Drezdenko (PL)
(72) Inventor: SOBOTA, Wladyslaw, 66-415 Klodawa (PL); SOBOTA, Rafal, 66-400 Gorzow Wielkopolski (PL); ZAWADZINSKA, Agnieszka, 72-003 Wolczkowo (PL)
(74) Representative: AOMB Polska Sp. z.o.o.

(57) **Abstract**

The subject of the invention is an growing medium comprising a wood fiber, high peat, green compost, low-moor peat and brown coal, which contains from 20 to 40 % (% volume) wood fiber with a pH from 4.8 to 5.8. The invention also provide a method of producing wood fiber, especially for use in an organic substrate, wherein a mixture of sawmill wood chips, forest wood chips, composted coniferous bark and un-composted coniferous bark are fiberized in a flail mill, wherein the hammer flails move perpendicularly to the surface of the sieve, through the perforation of which the input material is pressed, and in the upper part of the mill the material is crushed by pressing against the counter knives.

## Description

The invention relates to a growing medium comprising a wood fiber and components such as: high peat, green compost, low-moor peat, and brown coal for use as a universal growing medium for ornamental plants, a growing medium for vegetables and herbs, and a growing medium for bedding and balcony plants. The invention also relates to a method of producing wood fiber as a significant component of environmentally friendly growing media.

A growing medium is the most significant factor that determines proper plant growth in horticultural crops. It is the environment for root development, from which plants absorb water and nutrients and thanks to which they maintain vertical growth. Providing optimal physical and chemical properties of the growing medium determines proper water and mineral uptake.

For many years, high peat has been the most important component for the production of peat-based growing media and growing media mixtures in horticultural crops. It has unique physicochemical properties and is phytosanitary clean. It is estimated that the EU market consumes about 34,609 bn m³ of peat.

In recent years, pursuant to the European Commission directive, limits on the use of peat are gradually being introduced (mainly for environmental reasons) and alternative components have been sought that could partially or completely replace peat in horticultural crops. This trend is most evident in amateur gardening, where alternative raw materials to peat can be used to a greater extent. The need for an ecological and healthy lifestyle in highly developed and risk-aware societies increases the pressure to grow horticultural crops such as vegetables, herbs, berries in organic growing media without mineral fertilization.

Over the last two years there has been an increase in the number of farms and the area of organic farming in Poland, which allow the use of only organic fertilizers and exclude chemical plant protection agents. The growing media used in modern, sustainable horticulture have to meet increasing requirements in terms of the raw materials used for their production.

Moreover, in accordance with applicable regulations, the growing media must be phytosanitary clean and meet the requirements for the pH of the growing medium appropriate for the plant group, the permissible level of salinity and the content of heavy metals. The aim of the invention is to develop an eco-friendly growing medium whose main ingredient is wood fiber, in response to market demand for organic substrates with reduced peat content. The aim of the invention is also to develop a method of producing the main component of the growing medium, i.e. wood fiber.

The subject of the invention is an organic growing medium comprising wood fiber, high peat, green compost, low- moor peat and brown coal, which contains from 20 to 40 % (% volume) of wood fiber with a pH from 4.8 to 5.8.

Preferably, the wood fiber comprises a mixture of Scots pine tree (*Pinus sylvestris*) components.

Preferably, the mixture of Scots pine tree components consists of (% volume):20% sawmill wood chips,
40 % forest wood chips,
35% composted coniferous bark,
5% un-composted coniferous bark.

Preferably, the organic growing medium has a pH in the range from 5.5 to 6.8, and NaCl content below 2.4 g·dm⁻³ and contains (% volume):
20% wood fiber,
20% green compost,
30% high peat,
20% low-moor peat,
10% brown coal.

Preferably, the organic growing medium has a pH in the range from 5.5 to 6.5, and NaCl content is below 1.5 g- dm⁻³ and contains (% volume ):
30% wood fiber,
20% green compost,
20% high peat,
20% low-moor peat,
10% brown coal.

Preferably, the organic growing medium has a pH in the range from 5.5 to 6.5 and NaCl content is below 2.5 g·dm⁻³ and contains (% volume):
40% wood fiber,
20% green compost,
20% high peat,
10% low-moor peat,
10% brown coal.

Another aspect of the invention is a method of producing the wood fiber, in particular for use in an organic substrate, in which a mixture of sawmill wood chips, forest wood chips, composted coniferous bark and un-composted coniferous bark are fiberized in a flail mill in which the hammer flails perform a motion perpendicular to the surface of the sieve and through the perforation of which the input material is pressed, and in the upper part of the mill the material is crushed by pressing against the counter knives.

The advantage of the growing medium containing wood fiber, according to the invention, is that it has an eco-innovative character due to its limited, compared to commonly used, content of high peat 20-30%, a non-renewable substrate, which is replaced by wood fiber in the amount of 20-40%, green compost 20%, low-moor peat 10-20% and brown coal 10%. In addition, thanks to the use of wood fiber, this growing medium can be used for the growing of different species of crops.

The subject of the invention is presented in preferred embodiment in the drawing, in which:

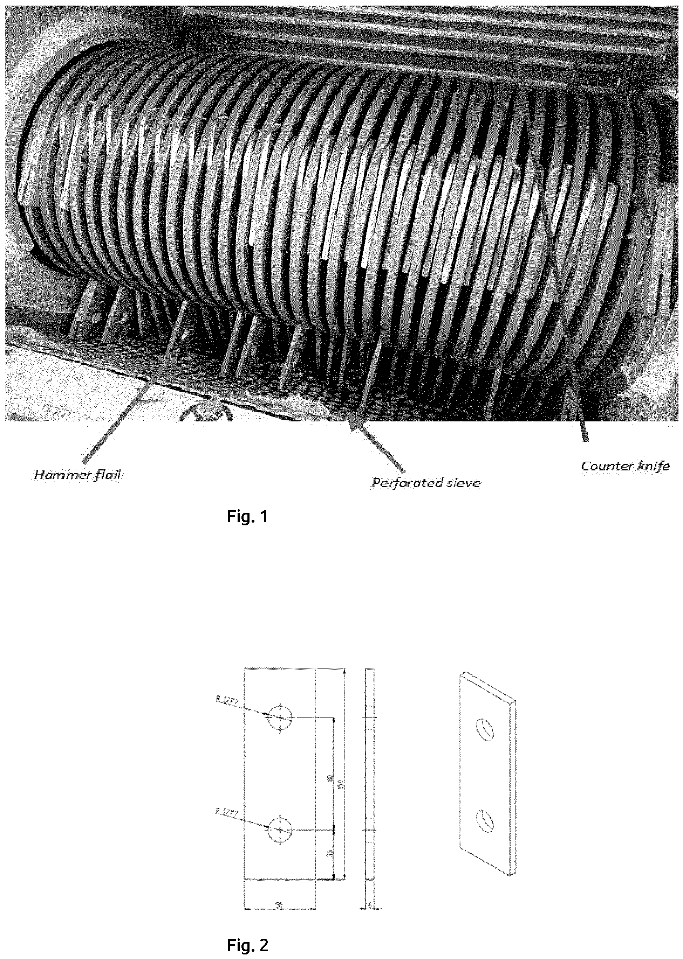

Fig. 1 shows a flail drum
Fig. 2 shows a hammer flail- the preferred option

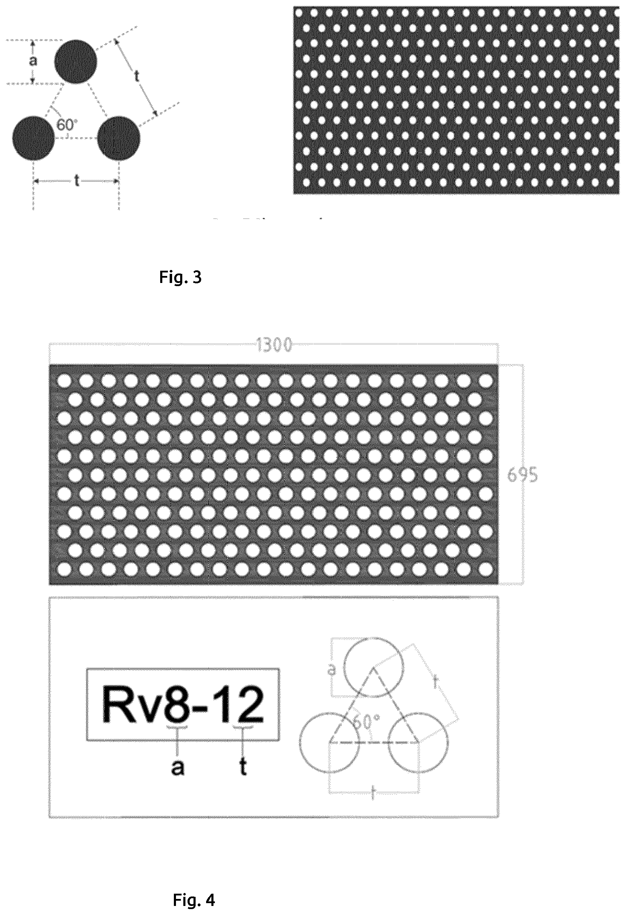

Fig. 3 shows a perforated sieve
Fig. 4 shows a perforated sieve - dedicated format 695 x 1300

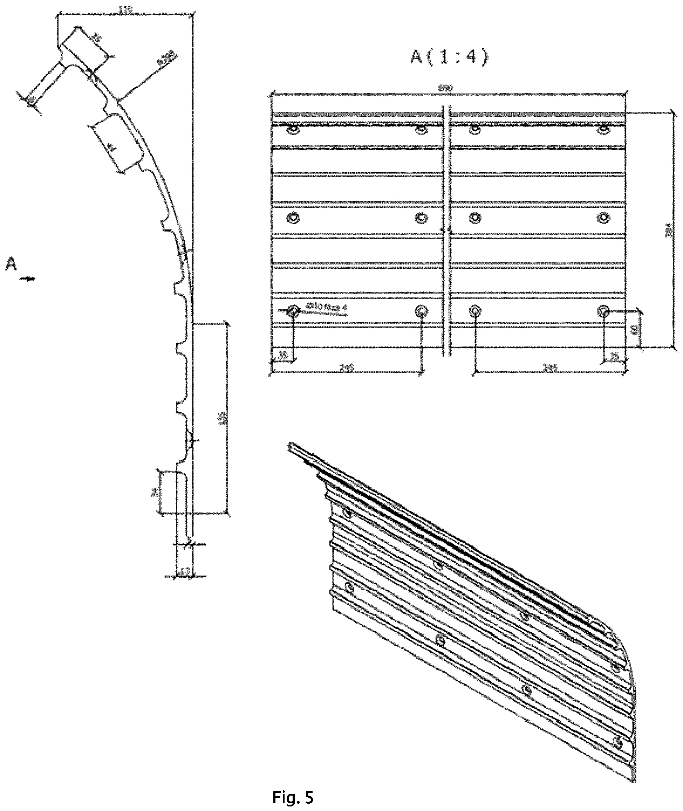

Fig. 5 shows a counter knife

The composition of the growing media was developed on the basis of physicochemical and chemical analyses of the substrates and 2 series of experiments conducted in greenhouses, evaluating the growth of 6 taxa of horticultural plants. In addition, the submitted substrates are phytosanitary clean and have no excessive heavy metal content.

The most important step in the process of producing growing media is the development of the material composition and treatment of the materials to produce wood fiber.

Wood fiber is an organic product produced from wood chips of different species, mostly coniferous, bark or a mixture of them. It is a light material, without impurities, with a high air capacity, which optimizes the physical properties of the growing medium. It is used in organic farming and in professional horticulture (container production).

This component supports water distribution in substrate and root ball development as demonstrated in greenhouse studies. Wood fiber can be used for mulching to prevent weed growth, soil drying and plant freezing. Wood fiber added to soil improves its structure and properties.

### Example 1: A method of producing wood fiber

The mixture of components is defibred in a flail mill with working tools such as knives, counter knives and sieves. During the mechanical process, the hammer flails attached to the rotary drum move perpendicularly to the surface of the sieve, through the perforation of which the input material is pressed. Moreover, in the upper part of the mill the material is crushed by pressing against the counter knives making fiberization more accurate and the operation of the machine more efficient. Obtaining the proper wood fiber structure in the process of fiberization depends on the appropriate perforation of the sieve, shape, hardness, abrasion resistance of the hammer flails and counter knives used.

**Input for wood fiber production consists entirely of pine *(Pinus sylvestris*) wood components in the following volume proportions:**
- sawmill wood chips 20% (pH 5.7; EC 0.08 mS cm⁻¹; N-tot. - 0.10% DM)
- forest wood chips, 40% (pH 4.6; EC - 0.56 mS cm⁻¹; N-tot. - 0.13% DM)
- composted coniferous bark 35% (pH 5.3; EC - 0.15 mS cm⁻¹; N-tot. - 0,.0% DM)
- un- composted coniferous bark 5% (pH 4.8; EC - 0.10 mS cm⁻¹; N-tot. - 0.41% DM)

**Wood fiber parameters:**
- solid, loose form, fraction 0-40 mm;
- pH 4.8-5.8;
- salinity < 0.4 g NaCl dm⁻³;
- bulk density 0.14-0.22 g cm⁻³;
- organic matter content 83-87% DM;
- water content (% vol. at -10 cm H2O) 40-49%;
- air content (% vol. at -10 cm H2O) 38-51%;
- total pore space (% vol.) 87-91%;
- organic carbon content 38-42% DM;
- total nitrogen content (N-tot.) 0.3-0.5% DM.
Particle fractions : > 20 mm - approx. 0-2%; 10-20 mm - 0-2%; 5-10 mm - 55-58%; 2-5 mm - 34-36%; 1-2 mm - 1-2%; < 1 mm - 0-5%.

The substrates were produced on a mixing machine in volume proportions in three variants:

### Example 2: Universal growing medium - variant I

The universal growing medium is intended for sowing seeds and planting ornamental plants grown in containers, on flowerbeds in the garden and on the balcony. It is recommended for growing plants with low and medium nutritional requirements, except for plants that prefer an acidic reaction of the substrate.

According to the invention, the pH of H2O is in the range from about 5.5 to about 6.8, the salt content NaCl < 2.4 g dm⁻³, the growing medium is in a solid, loose form with a fraction of about 0-40 mm.

It constitutes a dry mixture of components, in which the content of high peat does not exceed 30%. It is obtained on the mixing line by combining the following components in a volume ratio:
- wood fiber 20% (pH - 4.8-5.8; salinity - 0.2 g NaCl dm⁻³)
- green compost 20% (pH - 7.6-8.3; salinity - 2.6-3.8 g NaCl dm⁻³)
- high peat 30% (pH - 4.0-4.2; salinity - 0.1-0.2 g NaCl dm⁻³)
- low-moor peat 20% (pH - 5.8-6.2; salinity - 0.7-1.0- g NaCl dm⁻³)
- brown coal 10% (fraction 2-4 mm; pH - 4.2-4.4; salinity - 2.4-3.4 g NaCl dm⁻

Growing medium parameters at the production scale are in the range:
- organic matter content 56-62%;
- bulk density 314-332 kg m⁻³
- total pore space approx. 82-84%.
Particle fraction: > 20 mm - approx. 0-6%; 10-20 mm - 2-13%; 5-10 mm - 7-13%; 2-5 mm - 21-40%; 1-2 mm - 27-32%; < 1 mm - 13-34%.

Adjustment of the pH value of the growing medium according to the specification can be achieved with a neutralization curve using limestone chalk at a rate of 1-2 kg·m⁻³ of growing medium.

The nutrients of the growing medium come mainly from compost. Additional nitrogen fertilisation will compensate for the slight loss of nitrogen through biosorption. The nitrogen content can be supplemented with mineral fertilizer, such as calcium nitrate at a dose of about 0.5-1.5 kg m⁻³.

### Example 3: Growing medium for vegetables and herbs - variant II

A growing medium for vegetables and herbs is designed for sowing seeds and growing vegetables and many species of herbs and aromatic plants.

According to the invention, the pH of H2O is in the range from about 5.5 to about 6.8, the salt content NaCl < 1.5 g dm⁻³, the growing medium is in a solid, loose form with a fraction of about 0-40 mm. It constitutes a dry mixture of components in which the content of high peat does not exceed 20%. It is obtained on the mixing line by combining the following components in a volume ratio:
- wood fiber 30% (pH - 4.8-5.8; salinity - 0.2 g NaCl dm⁻³)
- green compost 20% (pH - 7.6-8.3; salinity - 2.6-3.8 g NaCl dm⁻³)
- high peat 20% (pH - 4.0-4.2; salinity - 0.1-0.2 g NaCl dm⁻³)
- low-moor peat 20% (pH - 5.8-6.2; salinity - 0.7-1.0 g NaCl dm⁻³)
- brown coal 10% (fraction 2-4 mm; pH -4.2-4.4; salinity - 2.4-3.4 g NaCl dm⁻³)

Growing medium parameters at the production scale are in the range:
- organic matter content 53-56%;
- bulk density 298-329 kg m⁻³;
- total pore space about 83-85%.
Particle fraction: > 20 mm - approx. 0-3%; 10-20 mm - 3-14%; 5-10 mm - 8-12%; 2-5 mm - 20-31%; 1-2 mm - 22-33%; < 1 mm - 9-32%.

Adjustment of the pH value of the growing medium according to the specification can be achieved with a neutralization curve using limestone chalk at a rate of 1-2 kg·m⁻³ of the growing medium. The nutrients contained in the growing medium come mainly from compost.

Additional nitrogen fertilization will compensate for its loss through biosorption. The nitrogen content can be supplemented with mineral fertilizer, e.g. calcium nitrate at a dose of approx. 0.5-1.5 kg m⁻³.

### Example 4: Growing medium for bedding and balcony plants - variant III

Growing medium for bedding and balcony plants is designed for the cultivation of plants flowering and ornamental plants with higher nutritional requirements. High nitrogen content stimulates leaf formation and potassium stimulates flowering. The addition of wood fibres enhances root system growth and flowering.

According to the invention, the pH H2O is in the range from about 5.5 to about 6.5, the salt content NaCl < 2.5 g dm⁻³, the growing medium is in a solid, loose form with fraction of about 0-40 mm.

It constitutes a dry mixture of components in which the content of high peat does not exceed 20%. It is obtained on the mixing line by combining the following components in a volume ratio:
- wood fiber 40% (pH -4.8-5.8; salinity -0.2 g NaCl dm⁻³);
- green compost 20% (pH - 7.6-8.3; salinity - 2.6-3.8 g NaCl dm⁻³);
- high peat 20% (pH - 4.0-4.2; salinity - 0.1-0.2 g NaCl dm⁻³);
- low-moor peat 10% (pH - 5.8-6.2; salinity - 0.7-1.0 g NaCl dm⁻³);
- brown coal 10% (fraction 2-4 mm; pH - 4.2-4.4; salinity - 2.4-3.4 g NaCl dm⁻³);

Growing medium parameters at the production scale are in the range:
- organic matter content 54-59%;
- bulk density 290-295 kg m⁻³;
- total pore space about 84-86% vol.
Particle fractions: > 20 mm - approx. 0-2%; 10-20 mm - 1-2%; 5-10 mm - 7-13%; 2-5 mm- 24-34%; 1-2 mm - 30-36%; < 1 mm - 29-35%.

Adjustment of the pH value of the growing medium according to the specification can be achieved with a neutralization curve using limestone chalk at a rate of 1-2 kg·m⁻³ of the growing medium. The nutrients contained in the growing medium come mainly from compost. Additional nitrogen fertilization will compensate for its loss through biosorption. The nitrogen content can be supplemented with mineral fertilizer, e.g. calcium nitrate at a dose of approx. 0.5-1.5 kg m⁻³

The invention may have large-scale applications in amateur gardening as well as in organic farms, particularly as a growing medium for sowing seeds, for planting ornamental plants, growing vegetables and many species of herbs and aromatic plants.

## Claims

1. An organic growing medium comprising a wood fiber, high peat, green compost, low-moor peat and brown coal, **characterised in that** it contains 20 to 40 % (% volume) of wood fiber with a pH from 4.8 to 5.8.

2. The organic growing medium, according to claim 1, **characterised in that** the wood fiber comprises a mixture of Scots pine tree (*Pinus sylvestris)* components.

3. The organic growing medium according to claim 2, **characterised in that** the mixture of Scots pine tree consists of (% volume):
20% sawmill wood chips,
40% forest wood chips,
35% composted coniferous bark,
5% un-composted coniferous bark.

4. The organic growing medium according to any of the preceding claims 1-3, **characterised in that** pH of the organic growing medium is in the range from 5.5 to 6.8, NaCl content is below 2.4 g·dm⁻³ and contains (% volume):
20% wood fiber,
20% green compost,
30% high peat,
20% low-moor peat,
10% brown coal.

5. The organic growing medium according to any of the preceding claims 1-3, **characterised in that** pH of the organic growing medium is in the range from 5.5 to 6.5, NaCl content is below 1.5 g·dm⁻³ and contains (% volume):
30% wood fiber,
20% green compost,
20% high peat,
20% low-moor peat
10% brown coal.

6. The organic growing medium according to any of the preceding claims 1-3, **characterised in that** pH of the organic growing medium is in the range from 5.5 to 6.5, NaCl content is below 2.5 g·dm⁻³ and contains (% volume):
40% wood fiber,
20% green compost,
20% high peat,
10% low-moor peat,
10% brown coal.

7. A method of producing the wood fiber, in particular for use in an organic growing medium as defined in any of claims 1-6, **characterised in that** a mixture of sawmill wood chips, forest wood chips, composted coniferous bark and un-composted coniferous bark are fiberized in a flail mill, in which the hammer flails move perpendicularly to the surface of the sieve, through the perforation of which the input material is pressed, and in the upper part of the mill the material is crushed by pressing against the counter knives.
